# EUROPÄISCHE PATENTSCHRIFT

(11) **EP 0 477 163 B1**
(45) Veröffentlichungstag und Bekanntmachung des Hinweises auf die Patenterteilung: **01.12.1993**
(21) Anmeldenummer: 91890199.2
(22) Anmeldetag: 09.09.1991
(51) Int. Cl.: B65G 49/06

(54) **Vorrichtung zum Sortieren von Glastafelzuschnitten**
Device for sorting sized glass sheets
Dispositif pour trier des découpes de plaques de verre

(30) Priorität: 18.09.1990 AT 1897/90; 19.04.1991 DE 9104816 U
(43) Veröffentlichungstag der Anmeldung: 25.03.1992
(73) Patentinhaber: Lisec, Peter, A-3363 Amstetten-Hausmening (AT)
(72) Erfinder: Lisec, Peter, A-3363 Amstetten-Hausmening (AT)
(74) Vertreter: Beer, Manfred, Dipl.-Ing.

(56) Entgegenhaltungen:
- EP-A- 0 048 334
- DD-A- 267 012
- DE-B- 2 539 352

## Beschreibung

Die Erfindung betrifft eine Vorrichtung zum Sortieren von Glastafelzuschnitten, mit einer Hebeeinrichtung für ihr auf einem Fördertisch zugeführte Glastafelzuschnitte, und mit wenigstens einem Fächerwagen, der mehrere Fächer für die Aufnahme jeweils eines Glastafelzuschnittes besitzt und der quer zur Richtung, in der ihm Glastafelzuschnitte zugeführt werden, verfahrbar ist, wobei wenigstens einem Fach des Fächerwagens eine Linearfördereinrichtung zum Einschieben eines Glastafelzuschnittes in ein Fach zugeordnet ist, wobei den übrigen Fächern frei drehbar Stützrollen, die am unteren Rand der Glastafelzuschnitte angreifen, zugeordnet sind, und wobei dem Fächerwagen eine Halterung für an einer Seitenfläche der Glastafelzuschnitte anlegbare Stützrollen zugeordnet ist.

Glasschneidemaschinen, in welchen Glastafeln entsprechend den erforderlichen Formaten zerteilt werden, also Glastafelzuschnitte hergestellt werden, zerteilen Glastafeln nach einem Optimierungsprogramm, das lediglich auf eine möglichst günstige Ausnützung der zur Verfügung stehenden Glasfläche Rücksicht nimmt. Die Optimierungsprogramme von Glasschneidemaschinen berücksichtigen nicht, ob die herzustellenden Zuschnitte zu einer bestimmten aus mehreren Glastafelzuschnitten bestehenden Lieferung gehören oder nicht.

Daher werden die Glastafelzuschnitte von Glasschneideanlagen hinsichtlich ihrer Verwendung oder ihrer Zugehörigkeit zu einer bestimmten Bestellung bzw. Lieferung völlig ungeordnet abgegeben.

Das nachträgliche Sortieren der Glastafelzuschnitte ist eine außerordentlich aufwendige Arbeit, die überdies viel Raum beansprucht, da mehrere Abstellflächen für die Glastafelzuschnitte benötigt werden. Da überdies Glastafelzuschnitte auch größere Formate haben können, sind für die Handhabung derselben entweder mehrere Bedienungspersonen oder Hebezeuge erforderlich.

Aus der DD-A1-267 012 ist eine Vorrichtung zum Umsetzen von Glastafelzuschnitten bekannt, mit der Glastafelzuschnitte um eine parallel zu einem Rand der Glastafelzuschnitte verlaufende Achse aus einer horizontalen Lage in eine im wesentlichen vertikale Stellung gekippt werden können.

Aus der DE-B-2 539 352 ist eine Vorrichtung bekannt, mit der Isolierglasscheiben, die auf einem Rollgang aufliegend, im wesentlichen horizontal ausgerichtet herangefördert werden, von einem Kipptisch in eine im wesentlichen vertikale Position hochschwenkt werden. Nach dem Hochschwenken stützen sich die Isolierglasscheiben bei der bekannten Vorrichtung mit ihrem dann unten liegenden Rand auf Transportrollen ab und werden in ein Fach eines Fächerwagens eingeschoben, der zur Auswahl des entsprechenden Faches senkrecht zur Scheibenvorschubrichtung verfahrbar ist. Der in der DE-B-2 539 352 geoffenbarte, neben dem Kipptisch vorgesehene Fächerwagen hat Fächer, die durch Lochbleche gebildet werden, wobei der Fächerwagen nach dem Einschieben einer Isolierglasscheibe in einem Fach taktweise verschoben wird, so daß nach und nach alle Fächer gefüllt werden können.

Aus der EP-B-48 334 ist eine Vorrichtung mit den Merkmalen des einleitenden Teils des unabhängigen Anspruches 1 bekannt. Dabei ist vorgesehen, daß am Ende einer Einrichtung zum Schneiden von Glastafeln eine Aufstellvorrichtung vorgesehen ist, welche die Glastafelzuschnitte aufstellt und dann über eine Fördereinrichtung nacheinander in die Fächer des Fächerwagens abgibt. Sobald bei der EP-B-48 334 ein Fächerwagen vollständig gefüllt ist, wird an die Abgabestation am Ende der Glasschneidelinie ein neuer Fächerwagen angeschlossen und gefüllt.

Nachteilig bei der aus der EP-B-48 334 bekannten Vorrichtung ist es, daß der Fächerwagen eine Vielzahl von Bewegungen ausführen muß, um die einzelnen Fächer des Fächergestells zu beschicken.

Der Erfindung liegt die Aufgabe zugrunde, eine Vorrichtung der eingangs genannten Gattung anzugeben, mit der Glastafelzuschnitte ohne großen Aufwand nach dem jeweils gewünschten Ordnungskriterium sortiert werden können.

In Lösung dieser Aufgabe ist die Vorrichtung zum Sortieren von Glastafelzuschnitten dadurch gekennzeichnet, daß die Hebeeinrichtung um eine parallel zu einem Rand der Glastafelzuschnitte verlaufende Achse verschwenkbar ist und eine Fördereinrichtung zum Transportieren der Glastafelzuschnitte längs dem einen Rand aufweist, und daß die, insbesondere rechenartige Halterung gegenüber jedem der Fächer des Fächerwagens so ausrichtbar ist, daß die Stützrollen seitlich in das Fach ragen.

Mit der erfindungsgemäßen Vorrichtung werden die von der Glasschneideanlage angelieferten Glastafelzuschnitte von der beispielsweise mit rechenartig angeordneten Hebearmen ausgestatteten Hebeeinrichtung vom Abgabeförderer der Glasschneideanlage übernommen, hochkant gestellt (gekippt) und dann in das gewünschte Fach eines Fächerwagens eingeschoben. Die Reibung an den seitlichen Abstützungen bzw. Begrenzungen der Fächer des Fächerwagens beim Einschieben der Glastafelzuschnitte ist bei der Erfindung klein, da dem Fächerwagen oder jedem der Fächerwagen eine, insbesondere rechenartige Halterung für an den Seitenflächen der Glastafelzuschnitte anlegbare Stützrollen zugeordnet ist, die so ausgerichtet werden kann, daß die Stützrollen seitlich in das jeweils zu beschickende Fach ragen.

Mit der Erfindung ist es nicht nur möglich, eine größere Anzahl von Glastafelzuschnitten zu sortieren, sondern es können auch mehrere zusammengehörige Glastafelzuschnitte entsprechend sortiert werden.

In einer Ausführungsform der Erfindung ist vorgesehen, daß der Hebeeinrichtung ein Fördertisch mit einer Fördereinrichtung, die vorzugsweise von mehreren Förderbändern gebildet ist, zum Transportieren der Glastafelzuschnitte quer zu ihrem Rand zugeordnet ist. Diese Ausführungsform hat den Vorteil, daß die Hebearme der Hebevorrichtung zwischen den Fördereinrichtungen des Fördertisches eingreifen und beim Nachobenschwenken einen von der Fördereinrichtung herangeförderten Glastafelzuschnitt von dieser abheben können.

In einer praktischen Ausführungsform der Erfindung kann vorgesehen sein, daß die Fördereinrichtung an der Hebeeinrichtung, insbesondere die Transportrollen des Rollenganges der Hebeeinrichtung in der parallel zum Fördertisch ausgerichteten Lage den Endanschlag für das Zufördern von Glastafelzuschnitten bilden.

In einer Ausführungsform der erfindungsgemäßen Vorrichtung ist vorgesehen, daß mehrere hintereinander angeordnete und unabhängig voneinander quer zur Förderebene der Glastafelzuschnitte, d.h. quer zur Ebene, in der die Glastafelzuschnitte von der Hebeeinrichtung in ihrer nach oben verschwenkten Stellung gehalten werden, verschiebbare Fächerwagen vorgesehen sind. Bei dieser Ausführungsform mit mehreren hintereinander angeordneten und quer verschiebbaren Fächerwagen können die Glastafelzuschnitte in mehrere Fächer aufgeteilt werden, ohne daß der Bearbeitungsfluß gestört wird. Dabei wird für gewöhnlich so vorgegangen, daß jeweils ein Fach eines Fächerwagens (mit Ausnahme des letzten Fächerwagens einer Gruppe) für den Durchtransport von Glastafelzuschnitten zum nachgeordneten Fächerwagen freigehalten wird. Dies wird in erster Linie das Fach sein, das mit einer Fördereinrichtung ausgestattet ist. Da die Fächerwagen unabhängig voneinander verstellbar sind, kann das Sortieren der Glastafelzuschnitte problemlos ausgeführt werden, da das gewünschte Fach in der Förderebene der Glastafelzuschnitte ausgerichtet werden kann.

Für die Verschiebbarkeit des Fächerwagens oder der Fächerwagen quer zur Zuführebene der Glastafelzuschnitte bestehen verschiedene Möglichkeiten. In einer Ausführungsform der Erfindung ist vorgesehen, daß der Fächerwagen oder die Fächerwagen auf Fahrgestellen aufgestellt sind, die mit Hilfe eines Antriebes quer zur Förderebene der Glastafeln, d.h. quer zur Ebene, in der die Glastafelzuschnitte von der Hebeeinrichtung in ihrer nach oben verschwenkten Stellung gehalten werden, verfahrbar sind. Sobald ein Fächerwagen mit Glastafelzuschnitten beschickt worden ist, wird er vom Fahrgestell abgehoben und kann zu Anlagen, z.B. zu einer Anlage zum Herstellen von Isolierglasscheiben, in der die Glastafelzuschnitte benötigt werden, transportiert werden.

Alternativ kann vorgesehen sein, daß der bzw. die Fächerwagen unten Räder aufweisen, die in Führungsschienen aufgenommen sind und daß an jedem der Fächerwagen eine Kupplung vorgesehen ist, mit welcher der Fächerwagen mit einem Antrieb zum Bewegen des Fächerwagens quer zu den Fächern verstellbar ist.

Die erfindungsgemäße Vorrichtung kann sich noch dadurch auszeichnen, daß die Linearfördereinrichtung, die vorzugsweise mehrere Transportrollen aufweist, in ihre unten in das Fach ragende Wirkstellung anhebbar sind. Auf diese Weise können die Glastafelzuschnitte einfach in das jeweilige Fach des Fächerwagens eingeschoben werden.

Die Linearfördervorrichtung ist bei der erfindungsgemäßen Vorrichtung entweder auf dem Fahrgestell oder am Boden heb- und senkbar montiert.

In einer praktischen Ausführungsform der Erfindung kann vorgesehen sein, daß die Fächer im Fächerwagen durch gespannte Stäbe oder Seile begrenzt sind.

Um das Einschieben der Glastafelzuschnitte in die Fächer des Fächerwagens weiter zu erleichtern, bewährt es sich, wenn an einer seitlichen Begrenzung jedes Faches frei drehbare Stützrollen, die an einer Seitenfläche der Glastafelzuschnitte angreifen, vorgesehen sind.

Die Abstützung der Glastafelzuschnitte in den Fächern von unten kann dadurch erfolgen, daß die Fächer unten durch voneinander beabstandete Auflager begrenzt sind.

Bei dieser Ausführungsform ist mit Vorteil vorgesehen, daß die Förderrollen der Linearfördereinrichtung zwischen den Auflagern bzw. den Stützrollen anhebbar und absenkbar angeordnet sind,

Wenn weiters, wie erfindungsgemäß vorgeschlagen, vorgesehen ist, daß die Halterung durch Bewegen der Halterung und/oder der Fächerwagen quer zu den Fächern der Fächerwagen verstellbar ist, dann genügt eine (rechenartige) Halterung für jeweils einen Fächerwagen, wobei sich zusätzlich der Vorteil ergibt, daß die Glastafelzuschnitte, wenn die rechenartige Halterung mit den seitlich anlegbaren Stützrollen aus dem Bereich eines Faches entfernt ist, an den seitlichen Begrenzungen des Faches anliegen und wegem der erhöhten Reibung an dem Fach nicht herausrutschen kann.

Um das Einschieben von Glastafelzuschnitten in das jeweils gewünschte Fach zu erleichtern, kann im Rahmen der Erfindung vorgesehen sein, daß an den freien, unteren Enden der Arme der rechenartigen Halterung Stützrollen, die an den unteren Rändern der Glastafel angreifen, vorgesehen sind. Zusätzlich kann vorgesehen sein, daß die Stützrollen mit einem Antrieb ausgestattet sind.

Aus räumlichen Gründen kann es sich empfehlen, zwischen der Hebeeinrichtung, welche die Glastafelzuschnitte hochkippt, und dem (ersten) Fächerwagen eine Vorrichtung, z.B. einen verfahrbaren Wagen, zum Transport von Glastafelzuschnitten von der Hebeeinrichtung zum (ersten) Fächerwagen vorzusehen. Bei dieser Ausführungsform werden die Glastafelzuschnitte von der Hebeeinrichtung nicht unmittelbar in ein Fach des (ersten) Fächerwagens eingeschoben, sondern zunächst auf die Vorrichtung abgestellt und dann von dieser, gegebenenfalls zusammen mit mehreren anderen Glastafelzuschnitten, transportiert. Auf dieser Vorrichtung lehnen die Glastafelzuschnitte mit der Fläche an einer seitlichen Abstützung, die z.B. von einem Rollenfeld gebildet ist, mit der sie vorher an den Hebearmen der Hebeeinrichtung anlagen. Die Vorrichtung kann eine untere Abstützung für die auf ihr abgestellten Glastafelzuschnitte, die z.B. als Förderrollengang aus antreibbaren Rollen ausgebildet ist, besitzen.

Weitere Einzelheiten und Merkmale der Erfindung ergeben sich aus der nachstehenden Beschreibung, in der auf die Zeichnungen Bezug genommen wird, in der Ausführungsbeispiele schematisch dargestellt sind.

Es zeigt
Fig. 1 eine Hebeeinrichtung mit einem dieser zugeordneten Fördertisch,
Fig. 2 eine Ausführungsform für Fächerwagen in Schrägansicht,
Fig. 3 eine andere Ausführungsform eines Fächerwagens,
Fig. 4 den Fächerwagen aus Fig. 3 von links der Fig. 3 aus gesehen,
Fig. 5 eine kombinierte Vorrichtung zum Sortieren von vorne,
Fig. 6 die Vorrichtung von Fig. 5 von oben und
Fig. 7 eine Ansicht der Hebeeinrichtung von Fig. 5 und 6 von rechts.

Einem Fördertisch 1, der mit mehreren Endlosförderbändern 2 ausgestattet ist, werden Glastafelzuschnitte 3 von einer Glasschneideanlage zugeführt. Die Glastafelzuschnitte 3 werden von den Förderbändern 2, die durch einen vorzugsweise gemeinsamen, nicht näher gezeigten Antrieb in Bewegung versetzt werden, bis zum abgabeseitigen Ende des Fördertisches 1 transportiert.

Neben dem abgabeseitigen Ende des Fördertisches 1 ist eine Hebeeinrichtung 4 vorgesehen, die im gezeigten Ausführungsbeispiel vier Gruppen von rechenartig angeordneten Hebearmen 5 aufweist. Die Hebearme 5 jeder Gruppe sind an einer Welle 6 frei auskragend befestigt und können durch Verdrehen der Welle 6 um deren Achse 7, die parallel zum benachbarten Rand 8 eines Glastafelzuschnittes 3 ausgerichtet ist, in Richtung des Pfeiles 9 hochgeschwenkt werden. Hiezu ist die Hebeeinrichtung 4 mit einem nicht gezeigten Antrieb gekuppelt.

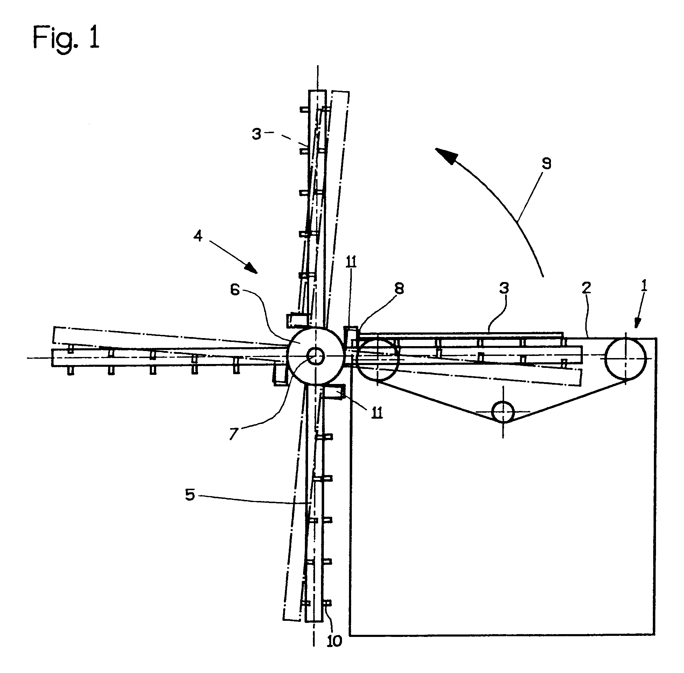

An jedem Hebearm 5 der Hebeeinrichtung 4 sind frei drehbare Rollen 10 und an ihren der Welle 4 benachbarten Enden antreibbare Transportrollen 11 angeordnet. Wie in Fig. 1 gezeigt, dienen die Transportrollen 11 gleichzeitig als Anschlag für den Rand 8 des Glastafelzuschnittes 3 und definieren so die Endstellung der Bewegung der Glastafelzuschnitte 3 auf dem Fördertisch 1.

Durch Verdrehen der Hebeeinrichtung 4 in richtung des Pfeiles 9 kann ein Glastafelzuschnitt 3 aus seiner horizontalen, auf den Förderbändern 2 des Fördertisches 1 liegenden Stellung in eine aufgerichtete Stellung verschwenkt werden, in welcher der Glastafelzuschnitt 3 mit der Vertikalen einen spitzen Winkel von vorzugsweise 3 bis 6° einnimmt, wie dies strichpunktiert in Fig. 1 gezeigt ist. In dieser Stellung lehnen die Glastafelzuschnitte 3 an den Stützrollen 10 und werden unten von den Transportrollen 11 getragen.

Nach dem Abtransport des aufgerichteten Glastafelzuschnittes 3 quer zur Bildebene von Fig. 1, d.h. im wesentlichen in Richtung der Achse 7 der Welle 6 der Hebeeinrichtung 4 wird die Hebeeinrichtung 4 ein Stück weitergedreht, so daß die Hebearme 5 der nächsten Gruppe von Hebearmen 5 zwischen die Förderbänder 2 des Fördertisches 1 eingreifen und die von den Stützrollen 10 an den Hebearmen 5 gebildete Ebene parallel zur Förderebene der Transportbänder 2 liegt. Durch erneutes Verdrehen der Hebeeinrichtung 4 kann der nächste Glastafelzuschnitt 3, der bereits herangefördert worden ist, bevor die Hebearme 5 parallel zur Transportebene des Fördertisches 1 ausgerichtet worden sind, vom Fördertisch 1 abgehoben und in seine im wesentlichen vertikale Stellung aufgerichtet werden.

Der Hebeeinrichtung 4 ist ein erster Fächerwagen 20 zugeordnet, der mehrere Fächer 21 für die Aufnahme von Glastafelzuschnitten 3 aufweist. Die Fächer 21 des Fächerwagens 20 werden von gespannten Stäben oder Seilen 22 gebildet. Zum Spannen der Stäbe oder Seile 22 sind über deren aus dem oberen Rahmenteil des Fächerwagens 20 ragende Enden kurze Federn 23 gesteckt, die mit Hilfe von Muttern 24 gespannt werden können. Die untere Begrenzung der Fächer 21 wird entweder von im Abstand voneinander angeordneten, gegebenenfalls antreibbaren Rollen oder durch fixe Auflager, die im Abstand voneinander angeordnet sind, gebildet.

Um das Einschieben der Glastafelzuschnitte 3 in Richtung des Pfeiles 25 in die Fächer 21 zu erleichtern, können an den Stäben oder Seilen 22 frei drehbare Rollen oder Kugeln angeordnet sein.

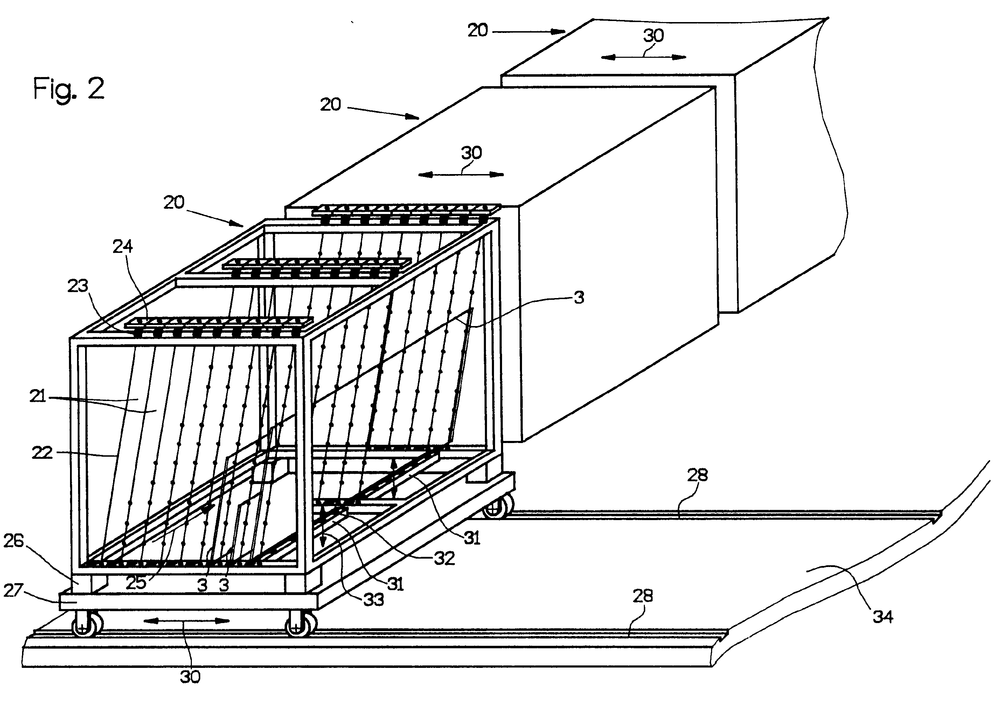

Bei der in Fig. 2 gezeigten Ausführungsform besitzt der Fächerwagen 20 unten Füße 26, über die er auf einem Fahrgestell 27 steht. Das Fahrgestell 27 ist über in Schienen 28 laufende Räder 29 in Richtung des Doppelpfeiles 30 hin- und her verfahrbar, so daß jedes Fach 21 des Fächerwagens 20 gegenüber der aufgerichteten Gruppe von Hebearmen 5 der Hebeeinrichtung 4 ausgerichtet werden kann.

Wie in Fig. 2 gezeigt, ist wenigstens einem Fach 21 des Fächerwagens 20 eine Linearfördereinrichtung 31 zugeordnet, die mehrere nach oben weisende Transportrollen 32 aufweist. Die Linearfördereinrichtung 31 kann in Richtung der Doppelpfeile 33 in den unteren Bereich eines Faches 21 gehoben werden und kann so die Bewegung eines Glastafelzuschnittes 3 in das Fach 21 des Fächerwagens 20 unterstützen. Dabei greifen die Rollen 32 der Linearfördereinrichtung 31 zwischen die dem Fach zugeordneten unteren Abstützelemente (Auflager oder Rollen) ein und die Rollen 32 greifen am unteren Rand 8 des Glastafelzuschnittes 3 an.

Eine solche Linearfördereinrichtung 31 kann jedem Fach des Fächerwagens 20 zugeordnet sein, oder es ist eine Linearfördereinrichtung 31 am Boden 34 anhebbar aufgebaut, so daß sie durch Verschieben des Fächerwagens 20 in Richtung des Doppelpfeiles 30 wahlweise jedem der Fächer 21 des Fächerwagens 20 zugeordnet werden kann.

Zum Verschieben des Fächerwagens 20 in Richtung des Doppelpfeiles 30 ist das Fahrgestell 27 mit einem nicht gezeigten Antrieb gekuppelt. Dieser Antrieb kann ein Ritzel-Zahnstangen-Antrieb oder ein Endlosriemen-Antrieb, vorzugsweise ein Zahnriemen-Antrieb sein, der betätigt wird, um das gewünschte Fach 21 des Fächerwagens 20 gegenüber der aufgestellten Gruppe von Hebearmen 5 der Hebeeinrichtung 4 auszurichten.

Wie in Fig. 2 gezeigt, sind mehrere Fächerwagen 20 hintereinander angeordnet. Dies erhöht die verfügbare Zahl der Fächer 21 und damit die Möglichkeiten des Ordnens von Glastafelzuschnitten 3. Beim Beschicken der Fächerwagen 20 mit Glastafelzuschnitten 3 wird ein Fach 21 jedes Fächerwagens 20 außer dem letzten Fächerwagen 20 für den Durchtransport von Glastafelzuschnitten 3 zum nächsten Fächerwagen 20 freigehalten.

Die Fächerwagen 20 einer Reihe von Fächerwagen 20 sind unabhängig voneinander in Richtung des Doppelpfeiles 30 verschiebbar, so daß die Glastafelzuschnitte 3 in beliebige Fächer 21 jedes der Fächerwagen 20 bewegt werden können.

Aus den Fig. 1 und 2 ist zu erkennen, daß die Fläche des Glastafelzuschnittes 3, die am Fördertisch 1 nach oben weist, auch bei der weiteren Handhabung des Glastafelzuschnittes 3 stets frei bleibt, d.h. an ihr greifen keine Stütz- oder Förderelemente an, was insoferne von Vorteil ist, als beispielsweise beschichtete Glastafelzuschnitte 3 transportiert und sortiert werden können, ohne daß die Gefahr besteht, daß die Beschichtung der Glastafelzuschnitte 3 durch angreifende Fördermittel oder Stützelemente beschädigt wird.

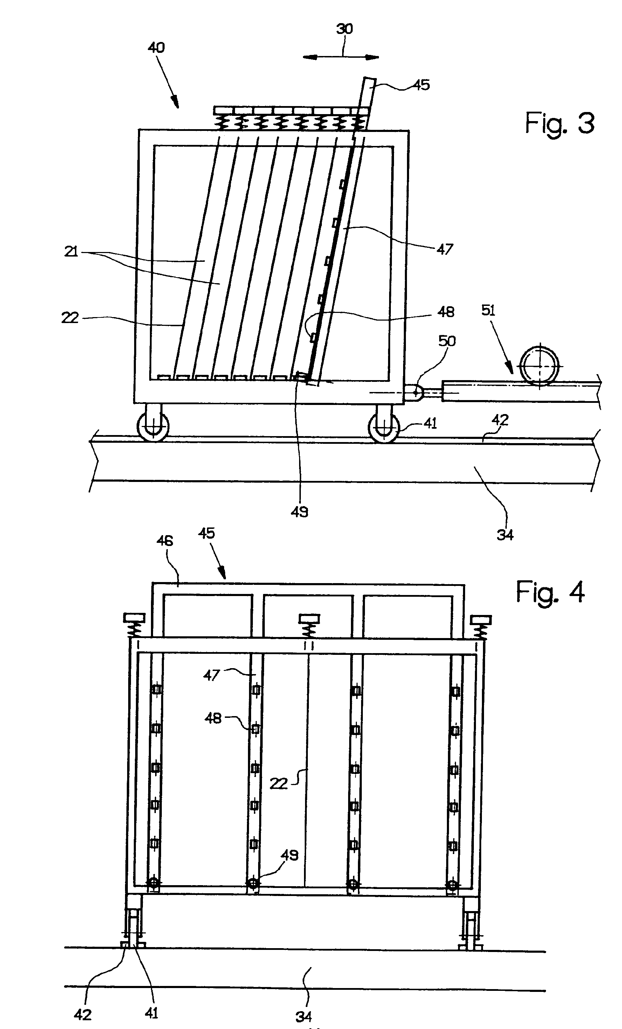

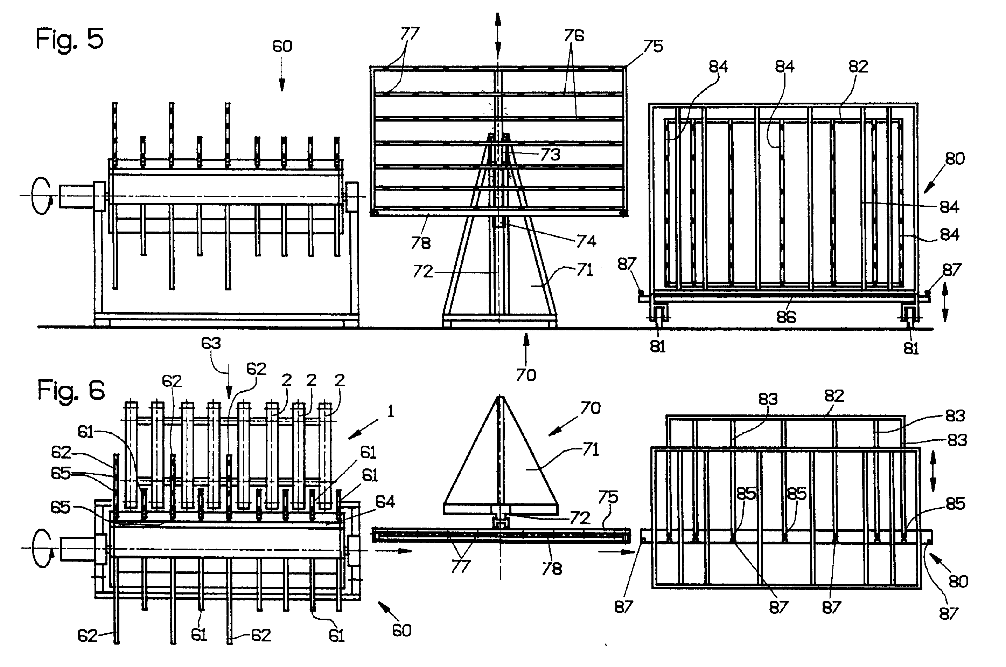

Der Fächerwagen 40 gemäß der in den Fig. 3 und 4 gezeigten Ausführungsform ist ähnlich ausgebildet wie der Fächerwagen 20 der Ausführungsform gemäß Fig. 2, mit dem Unterschied, daß er unmittelbar auf Rädern 41 am Boden 34 verfahrbar ist. Um den Fächerwagen 40 exakt zu führen, sind die Räder 41 zwischen Führungsschienen 42 aufgenommen oder es sind am Boden 34 U-förmige Profile montiert, in welchen die Räder 41 laufen.

Beim Fächerwagen 40 sind an den gespannten Stäben oder Seilen 22, welche die Fächer 21 begrenzen, keine Rollelemente vorgesehen, sondern es ist eine im wesentlichen rechenartig ausgebildete Halterung 45 vorgesehen, die im gezeigten Ausführungsbeispiel vier von einem Balken 46 nach unten ragende Arme 47 aufweist. An den Armen 47 der Halterung 45 sind frei drehbare Abstützrollen 48 und an den freien, unteren Enden der Arme 47 Stütz- und Transportrollen 49, die am unteren Rand 8 von Glastafelzuschnitten 3 angreifen, montiert. Die Stütz- und Transportrollen 49 bilden die Linearfördereinrichtung. Wie aus Fig. 3 ersichtlich, kann die Halterung 45 gegenüber jedem der Fächer 21 des Fächerwagens 40 so ausgerichtet werden, daß die Stützrollen 48 seitlich und die Transport- und Abstützrollen 49 von unten in das Fach 21 ragen. Die Halterung 45 kann durch Bewegen des Fächerwagens 40 in Richtung des Doppelpfeiles 30 und/oder durch Bewegen der Halterung 45 selbst gegenüber jedem Fach 21 ausgerichtet werden.

Um den Fächerwagen 40 der Ausführungsform gemäß Fig. 3 und 4 in Richtung des Doppelpfeiles 30 zu bewegen, ist an diesem eine Kupplung 50 vorgesehen, über die der Fächerwagen 40 mit einem Stellantrieb 51, der im gezeigten Ausführungsbeispiel als Zahnstangen-Ritzel-Antrieb ausgeführt ist, gekuppelt werden kann.

Eine Halterung 45 mit Abstützrollen 48 und gegebenenfalls mit Stütz- und Transportrollen 49 ist auch bei den Fächerwagen 20 gemäß Fig. 2 vorgesehen. Die Rollen an den gespannten Stäben oder Seilen 22 der Fächerwagen 20 können auch entfallen. Solche Rollen können auch an den gespannten Stäben oder Seilen 22 des Fächerwagens 40 vorgesehen sein.

Die anhebbare Linearfördereinrichtung 31 (Fig. 2) kann auch bei der Ausführungsform der Fächerwagen 40 gemäß den Fig. 3 und 4 verwendet werden. In diesem Fall können die Stütz- und Transportrollen 49 an der Halterung 45 auch entfallen.

Falls es aus räumlichen oder sonstigen Gründen nicht erwünscht ist, daß die Glastafelzuschnitte 3 von der Hebeeinrichtung 4 unmittelbar in den (ersten) Fächerwagen 20 oder 40 eingeschoben werden, dann kann ein zusätzlicher Transportwagen vorgesehen sein, auf den die Glastafelzuschnitte 3 von der Hebeeinrichtung 4 geschoben werden und der dann gegenüber dem ersten Fächerwagen 20 ausgerichtet ist. Der Transportwagen besteht aus einem einfachen Fahrgestell, dessen Räder Lenkrollen sein können oder der in Schienen geführt ist und der eine seitliche Abstützung, vorzugsweise ein Rollenfeld und eine untere Abstützung für die Glastafelzuschnitte 3 aufweist. Die untere Abstützung für Glastafelzuschnitte 3 am Transportwagen kann aus einem Rollengang mit antreibbaren Rollen bestehen, um die Bewegungen der Glastafelzuschnitte 3 zu vereinfachen.

In den Fig. 5 und 6 ist eine weitere Ausführungsform der Erfindung in Vorderansicht bzw. in Draufsicht dargestellt, wobei die Neigung der Förderebenen der einzelnen Einrichtungen zum Sortieren um 3 bis 6° nach hinten in den Fig. 5 und 6 nicht berücksichtigt wurde.

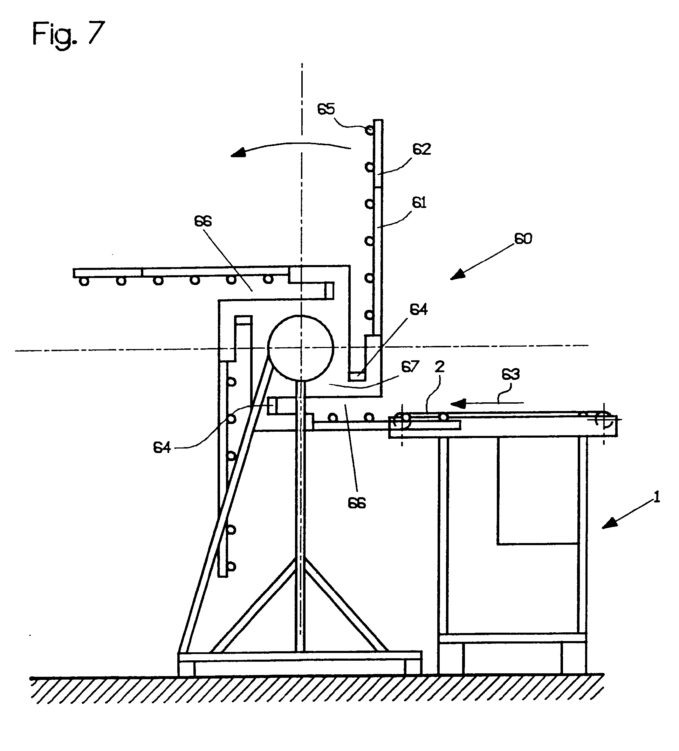

Wie in den Fig. 6 und 7 ersichtlich, werden Glastafelzuschnitte über den Fördertisch 1, der mit Endlosförderbändern 2 ausgestattet ist, von einer Glasschneideanlage der Hebeeinrichtung 60 zugeführt. Die Hebeeinrichtung 60 weist vier Gruppen von Hebearmen 61 und 62 auf, wobei die Hebearme 61 kürzer als die Hebearme 62 sind. An den Hebearmen 61 und 62 sind Stützrollen 65 angebracht, auf denen die Glastafelzuschnitte 3 aufliegen und abrollen, wenn sie vom Fördertisch 1 in Richtung des Pfeiles 63 (Fig. 6 und 7) herangefördert werden.

Die Hebeeinrichtung 60 weist schlitzähnliche Aufnahmebereiche 66 für die Glastafelzuschnitte 3 auf, wobei die Aufnahmebereiche 66 seitlich von den Hebearmen 61 und 62 bzw. deren Stützrollen 65 und dem Grundkörper 67 der Hebeeinrichtung 60 und innen von einer als Endlosförderband ausgebildeten Fördereinrichtung 64 begrenzt werden.

Neben der Hebeeinrichtung 60 ist ein Vertikalförderer 70 angeordnet, dessen Förderebene um etwa 3 bis 6° nach hinten geneigt ist. Der Vertikalförderer 70 besteht aus einem Grundgestell 71 mit einer im wesentlichen vertikalen Gleitführung 72, die parallel zur um 3 bis 6° nach hinten geneigten Förderebene und rechtwinkelig zur Förderrichtung ausgerichtet ist. An dieser Gleitführung 72 ist über entsprechende Führungen 73 und 74 ein Stützrahmen 75 über nicht dargestellte Antriebsmittel, z.B. Hydromotoren oder Kolben-Zylinder-Einheiten, auf- und abverschiebbar. Am Stützrahmen 75 sowie an dessen horizontalen Gitterstreben 76 sind Stützrollen 77 drehbar gelagert. Am unteren Ende des Stützrahmens 75 ist weiters eine als Endlosförderband ausgebildete Fördereinrichtung 78 angeordnet. Neben dem Vertikalförderer 70 ist ein Fächerwagen 80 angeordnet, der über Räder 81 quer zur Förderebene vor- und zurückschiebbar ist. Die Fächer des Fächerwagens 80 sind um den gleichen Winkel wie die Förderebene des Vertikalförderers 70, also um etwa 3 bis 6°, nach hinten geneigt. Um das Hineinfördern der einzelnen Glastafelzuschnitte 3 in die von Stäben oder gespannten Seilen begrenzten Fächer zu erleichtern, ist eine Halterung 82 vorgesehen, die rechenartig angeordnete Streben 83 aufweist. An den vertikalen Schenkeln 84 der Streben 83 sind Stützrollen 85 angebracht, an denen sich die Glastafelzuschnitte 3 bei ihrem Transport in oder durch ein Fach des Fächerwagens 80 abstützen. Zur vertikalen Abstützung der Glastafelzuschnitte ist ein Stützbalken 86 vorgesehen, der gegebenenfalls antreibbare Stützrollen 87 trägt, die den vertikalen (d.h. etwa 3 bis 6° nach hinten geneigten) Schenkeln 84 der Streben 83 zugeordnet sind. Zusätzlich befinden sich in Transportrichtung vor und nach dem Fächerwagen 80 noch zusätzlich je eine Transport- bzw. Stützrolle 87, die ebenfalls am Stützbalken 86 angeordnet sind. Der Stützbalken 86 mit angetriebenen Stützrollen 87 bildet die Linearfördereinrichtung

Der Stützbalken 86 ist nach oben und unten heb- bzw. senkbar, wodurch die Förderrollen 87 in bzw. außer Anlage an den unteren Rand eines Glastafelzuschnittes 3 gebracht werden können.

Der Durchlauf eines Glastafelzuschnittes 3 durch die Vorrichtung zum Sortieren gemäß den Fig. 5 bis 7 erfolgt folgendermaßen:

Ein Glastafelzuschnitt 3 wird von einem nicht dargestellten Glasschneidetisch in Richtung des Pfeiles 63 (Fig. 6 und 7) an den Fördertisch 1 herangefördert und von diesem zur Hebeeinrichtung 60 weitergefördert. Der Glastafelzuschnitt 3 wird in einen der Aufnahmebereiche 66 der Hebeeinrichtung 60 gefördert, wobei die entsprechenden Hebearme 61 und 62 mit dem Fördertisch 1 eine Förderebene bilden. Der Glastafelzuschnitt 3 wird so weit in den Aufnahmebereich 66 gefördert, bis er mit seinem vorderen Rand am jetzt stillstehenden Förderband 64 anliegt. Die Hebeeinrichtung 60 dreht sich nun gegen den Uhrzeigersinn so weit, bis die Hebearme 61, 62 um etwa 3° zur Vertikalen nach hinten geneigt sind. Die Hebearme 61, 62 bzw. deren Stützrollen 65 liegen mit den Stützrollen 77 des Vertikalförderers 70 in einer Förderebene. Der Glastafelzuschnitt 3 wird durch das Förderband 64 der Hebeeinrichtung 60 und das Förderband 78 des Vertikalförderers 70 weiterbewegt, bis sich der Glastafelzuschnitt 3 vollständig auf dem Vertikalförderer 70 befindet. Der Stützrahmen 75 des Vertikalförderers wird nun entlang der Gleitführung 72 abgesenkt, bis er sich in der richtigen Höhe in Beziehung zum Fächerwagen 80 befindet. Dieser Fächerwagen 80 wurde in der Zwischenzeit durch Verschiebung quer zur Förderebene so positioniert, daß der Glastafelzuschnitt in das gewünschte Fach eingeschoben werden kann. Dazu wird der Stützbalken 86 angehoben und das Förderband 78 des Vertikalförderers 70, das beim Absenken des Stützrahmens 75 still stand, wieder eingeschaltet. Der Glastafelzuschnitt 3 wird in ein Fach des Fächerwagens 80 eingeschoben, wobei er sich nunmehr an den Stützrollen 85 der Halterung 82 und an den gegebenenfalls angetriebenen Förderrollen 87 des Stützbalkens 86 abstützt, bis er vollständig in ein Fach des Fächerwagens 80 hineingeschoben worden ist.

Währenddessen kann bereits ein neuer Glastafelzuschnitt 3 über den Fördertisch 1 in die Hebeeinrichtung 60 eingeschoben und nach oben gekippt worden sein, so daß ein kontinuierliches Sortieren von Glastafelzuschnitten 3 im Fächerwagen 80 oder mehreren Fächerwagen durchgeführt werden kann.

Auch bei der soeben beschriebenen Ausführungsform der erfindungsgemäßen Vorrichtung können mehrere Fächerwagen, in Förderrichtung gesehen hintereinander, angeordnet werden, wobei jedem weiteren Fächerwagen jeweils eine eigene Halterung 45 oder 82 oder eine auf ähnliche Weise arbeitende Einrichtung zugeordnet ist.

## Patentansprüche

1. Vorrichtung zum Sortieren von Glastafelzuschnitten (3), mit einer Hebeeinrichtung (4, 60) für ihr auf einem Fördertisch (1) zugeführte Glastafelzuschnitte (3), und mit wenigstens einem Fächerwagen (20, 40, 80), der mehrere Fächer (21) für die Aufnahme jeweils eines Glastafelzuschnittes (3) besitzt und der quer zur Richtung, in der ihm Glastafelzuschnitte (3) zugeführt werden, verfahrbar ist, wobei wenigstens einem Fach (21) des Fächerwagens (20, 40, 80) eine Linearfördereinrichtung (31, 49, 86) zum Einschieben eines Glastafelzuschnittes (3) in ein Fach (21) zugeordnet ist, wobei den übrigen Fächern (21) frei drehbare Stützrollen, die am unteren Rand (8) der Glastafelzuschnitte (3) angreifen, zugeordnet sind, und wobei dem Fächerwagen (20, 40, 80) eine Halterung (45, 82) für an einer Seitenfläche der Glastafelzuschnitte (3) anlegbare Stützrollen (48, 85) zugeordnet ist, dadurch gekennzeichnet, daß die Hebeeinrichtung (4, 60) um eine parallel zu einem Rand (8) der Glastafelzuschnitte (3) verlaufende Achse (7) verschwenkbar ist und eine Fördereinrichtung (11, 64) zum Transportieren der Glastafelzuschnitte (3) längs dem einen Rand (8) aufweist, und daß die, insbesondere rechenartige Halterung (45, 82) gegenüber jedem der Fächer (21) des Fächerwagens (20, 40, 80) so ausrichtbar ist, daß die Stützrollen (48, 85) seitlich in das Fach (21) ragen.

2. Vorrichtung nach Anspruch 1, dadurch gekennzeichnet, daß die am unteren Rand (8) der Glastafelzuschnitte angreifenden Stützrollen arretierbar sind oder durch Auflager ersetzt sind.

3. Vorrichtung nach Anspruch 1 oder 2, dadurch gekennzeichnet, daß der Hebeeinrichtung (4, 60) ein Fördertisch (1) mit einer Fördereinrichtung, die vorzugsweise von mehreren Förderbändern (2) gebildet ist, zum Transportieren der Glastafelzuschnitte (3) quer zum Rand (8) zugeordnet ist.

4. Vorrichtung nach einem der Ansprüche 1 bis 3, dadurch gekennzeichnet, daß die Fördereinrichtung (11, 64) an der Hebeeinrichtung (4, 60), insbesondere die Transportrollen des Rollenganges oder der Endlosförderer der Hebeeinrichtung (4, 60) in der parallel zum Fördertisch (1) ausgerichteten Lage den Endanschlag für das Zufördern von Glastafelzuschnitten (3) bilden.

5. Vorrichtung nach einem der Ansprüche 1 bis 4, dadurch gekennzeichnet, daß mehrere hintereinander angeordnete und unabhängig voneinander quer (Pfeil 30) zur Transportrichtung der Glastafelzuschnitte verschiebbare Fächerwagen (20, 40, 80) vorgesehen sind.

6. Vorrichtung nach einem der Ansprüche 1 bis 5, dadurch gekennzeichnet, daß der Fächerwagen (20) bzw. die Fächerwagen (20) auf Fahrgestellen (27) aufgestellt sind, die mit Hilfe eines Antriebes (51) quer (Pfeil 30) zur Transportrichtung der Glastafelzuschnitte (3) verfahrbar sind.

7. Vorrichtung nach einem der Ansprüche 1 bis 6, dadurch gekennzeichnet, daß die Linearfördereinrichtung (31, 86), die vorzugsweise mehrere Transportrollen (32, 87) aufweist, in ihre unten in das Fach (21) ragende Wirkstellung anhebbar sind.

8. Vorrichtung nach Anspruch 6 oder 7, dadurch gekennzeichnet, daß die Linearfördereinrichtung (31, 86) auf dem Fahrgestell (27) oder am Boden (34) heb- und senkbar montiert ist.

9. Vorrichtung nach einem der Ansprüche 1 bis 5, dadurch gekennzeichnet, daß der Fächerwagen (40, 80) bzw. die Fächerwagen (40, 80) unten Räder (41, 81) aufweisen, die gegebenenfalls in Führungsschienen (42) aufgenommen sind, und daß am Fächerwagen (40, 80) eine Kupplung (50) vorgesehen ist, mit welcher der Fächerwagen (40, 80) mit einem Antrieb (51) zum Verstellen des Fächerwagens (40, 80) quer zur Transportrichtung der Glastafelzuschnitte verstellbar ist.

10. Vorrichtung nach einem der Ansprüche 1 bis 9, dadurch gekennzeichnet, daß die Fächer (21) des Fächerwagens (20, 40, 80) durch gespannte Stäbe oder Seile (22) begrenzt sind.

11. Vorrichtung nach einem der Ansprüche 1 bis 10, dadurch gekennzeichnet, daß an einer seitlichen Begrenzung jedes Faches (21) frei drehbare Stützrollen, die an einer Seitenfläche der Glastafelzuschnitte (3) angreifen, vorgesehen sind.

12. Vorrichtung nach einem der Ansprüche 1 bis 11, dadurch gekennzeichnet, daß die die Fächer (21) unten begrenzenden Auflager oder Stützrollen mit Abstand angeordnet sind.

13. Vorrichtung nach Anspruch 12, dadurch gekennzeichnet, daß die Förderrollen (32, 87) der Linearfördereinrichtung (31, 86) zwischen den Auflagern bzw. den Stützrollen anhebbar und absenkbar angeordnet sind.

14. Vorrichtung nach einem der Ansprüche 1 bis 13, dadurch gekennzeichnet, daß die Transportrollen (32, 87) auf einem gemeinsamen Balken (31, 86) gelagert sind.

15. Vorrichtung nach einem der Ansprüche 1 bis 14, dadurch gekennzeichnet, daß die Halterung (45, 82) durch Bewegen der Halterung (45, 82) und/oder des Fächerwagens (20, 40, 80) quer zu den Fächern (21) des Fächerwagens (20, 40) verstellbar ist.

16. Vorrichtung nach einem der Ansprüche 1 bis 14, dadurch gekennzeichnet, daß an den freien, unteren Enden der Arme (47) der rechenartigen Halterung (45) Stützrollen (49), die am unteren Rand (8) der Glastafelzuschnitte (3) angreifen, vorgesehen sind.

17. Vorrichtung nach Anspruch 16, dadurch gekennzeichnet, daß die Stützrollen (49) mit einem Antrieb ausgestattet sind.

18. Vorrichtung nach einem der Ansprüche 1 bis 17, dadurch gekennzeichnet, daß zwischen der Hebeeinrichtung (4, 60) und dem (ersten) Fächerwagen (20, 40, 80) eine, gegebenenfalls verfahrbare, Vorrichtung (70) zum Transport von Glastafelzuschnitten (3) von der Hebeeinrichtung (4, 60) zum Fächerwagen (20, 40, 80) vorgesehen ist.

19. Vorrichtung nach Anspruch 17, dadurch gekennzeichnet, daß die Vorrichtung (70) einen Stützrahmen (75) für Glastafelzuschnitte (3) aufweist, der heb- und senkbar ist.

20. Vorrichtung nach Anspruch 19, dadurch gekennzeichnet, daß am Stützrahmen (75), gegebenenfalls frei drehbare, Stützrollen (77) für einen Glastafelzuschnitt (3) gelagert sind.

21. Vorrichtung nach Anspruch 19 oder 20, dadurch gekennzeichnet, daß am Stützrahmen (75) eine am unteren Rand (8) eines Glastafelzuschnittes (3) angreifende Fördervorrichtung (78) vorgesehen ist.

## Claims

1. Apparatus for sorting sized glass sheets (3), with a lifting device (4, 60) for sized glass sheets (3) delivered to it on a conveyor table (1) and with at least one partitioned trolley (20, 40, 80) having several compartments (21) for receiving one sized glass sheet (3) each and movable transversely of the direction in which sized glass sheets (3) are delivered to it, a linear conveying arrangement (31, 49, 86) for pushing a sized glass sheet (3) into a compartment (21) being associated with at least one compartment (21) of the partitioned trolley (20, 40, 80), freely rotatable supporting rollers acting on the bottom edge (8) of the sized glass sheets (3) being associated with the remaining compartments (21), and a holder (45, 82) for supporting rollers (48, 85) which can be placed against a side surface of the sized glass sheets (3) being associated with the partitioned trolley (20, 40, 80), characterised in that the lifting device (4, 60) is swingable about an axis (7) extending parallel to one edge (8) of the sized glass sheets (3) and has a conveying arrangement (11, 64) for transporting the sized glass sheets (3) along the one edge (8), and the, more particularly rake-like, holder (45, 82) can be so aligned with respect to each of the compartments (21) of the partitioned trolley (20, 40, 80) that the supporting rollers (48, 85) project laterally into the compartment (21).

2. Apparatus according to claim 1, characterised in that the supporting rollers acting on the bottom edge (8) of the sized glass sheets can be fixed or are replaced by abutments.

3. Apparatus according to claim 1 or 2,characterised in that a conveyor table (1) with a conveying arrangement preferably formed by several conveyor belts (2), for transporting the sized glass sheets (3) transversely of the edge (8), is associated with the lifting device (4,60).

4. Apparatus according to any one of claims 1 to 3, characterised in that the conveying arrangement (11, 64) on the lifting device (4, 60), in particular the transporting rollers of the roller train or the endless conveyor of the lifting device (4, 60), form the end stop for the delivery of sized glass sheets (3) in the position of alignment parallel to the conveyor table (1).

5. Apparatus according to any one of claims 1 to 4, characterised in that a plurality of partitioned trolleys (20, 40, 80) arranged one behind the other and movable independently of one another transversely (arrow 30) of the direction of conveyance of the sized glass sheets is provided.

6. Apparatus according to any one of claims 1 to 5, characterised in that the partitioned trolley (20) or the partitioned trolleys (20) is or are placed on top of undercarriages (27) which are movable transversely (arrow 30) of the direction of conveyance of the sized glass sheets (3) with the aid of a drive (51).

7. Apparatus according to any one of claims 1 to 6, characterised in that the linear conveying arrangement (31, 86), which preferably has several transporting rollers (32, 87), can be raised into its operative position in which it projects into the compartment (21) at the bottom.

8. Apparatus according to claim 6 or 7, characterised in that the linear conveying arrangement (31, 86) is mounted to be raised or lowered on the undercarriage (27) or on the ground (34).

9. Apparatus according to any one of claims 1 to 5, characterised in that the partitioned trolley (40, 80) or the partitioned trolleys (40, 80) has or have wheels (41, 81) underneath which are received if necessary in guide rails (42) and on the partitioned trolley (40, 80) a coupling (50) is provided with which the partitioned trolley (40, 80) can be shifted transversely of the direction of conveyance of the sized glass sheets by a drive (51) for shifting the partitioned trolley (40, 80).

10. Apparatus according to any one of claims 1 to 9, characterised in that the compartments (21) of the partitioned trolley (20, 40, 80) are defined by tensioned rods or cables (22).

11. Apparatus according to any one of claims 1 to 10, characterised in that freely rotatable supporting rollers acting on a side surface of the sized glass sheets (3) are provided at a side boundary of each compartment (21).

12. Apparatus according to any one of claims 1 to 11, characterised in that the abutments or supporting rollers defining the compartments (21) at the bottom are arranged at intervals.

13. Apparatus according to claim 12, characterised in that the transporting rollers (32, 87) of the linear conveying arrangement (31, 86) are arranged to be raisable and lowerable between the abutments or supporting rollers.

14. Apparatus according to any one of claims 1 to 13, characterised in that the transporting rollers (32, 87) are mounted on a common beam (31, 86).

15. Apparatus according to any one of claims 1 to 14, characterised in that the holder (45, 82) is adjustable transversely with respect to the compartments (21) of the partitioned trolley (20, 40) by moving the holder (45, 82) and/or the partitioned trolley (20, 40,80).

16. Apparatus according to any one of claims 1 to 14, characterised in that supporting rollers (49) acting on the bottom edge (8) of the sized glass sheets (3) are provided at the free, bottom ends of the arms (47) of the rake-like holder (45).

17. Apparatus according to claim 16, characterised in that the supporting rollers (49) are equipped with a drive.

18. Apparatus according to any one of claims 1 to 17, characterised in that a device (70), which is movable if necessary, for transporting sized glass sheets (3) from the lifting device (4, 60) to the partitioned trolley (20, 40, 80) is provided between the lifting device (4, 60) and the (first) partitioned trolley (20, 40, 80).

19. Apparatus according to claim 17, characterised in that the device (70) has a supporting frame (75) for sized glass sheets (3) which is raisable and lowerable.

20. Apparatus according to claim 19, characterised in that supporting rollers (77) for a sized glass sheet (3), which are freely rotatable if necessary, are mounted on the supporting frame (75).

21. Apparatus according to claim 19 or 20, characterised in that a conveying device (78) acting on the bottom edge (8) of a sized glass sheet (3) is provided on the supporting frame (75).

## Revendications

1. Dispositif de tri de plaques de verre découpées (3), comportant: un dispositif de relevage (4, 60) pour des plaques de verre découpées (3) qui lui sont amenées sur une table transporteuse (1) et au moins un chariot (20, 40, 80) à casiers qui possède plusieurs casiers (21) destinés à recevoir chacun une plaque de verre découpée (3), et qui peut être déplacé perpendiculairement à la direction dans laquelle des plaques de verre découpées lui sont amenées, un dispositif de transport linéaire (31, 49, 86) pour l'introduction d'une plaque de verre découpée (3) dans un casier (21) étant associé à au moins un casier (21) du chariot (20, 40, 80), des galets d'appui tournant librement qui agissent sur le bord inférieur (8) des plaques de verre découpées (3) étant associés aux autres casiers (21), et une monture (45, 82) pour des galets d'appui (48, 85) applicables contre une face des plaques de verre découpées (3) étant conjuguée au chariot (20, 40, 80) à casiers, caractérisé par le fait que le dispositif de relevage (4, 60) est monté à pivotement autour d'un axe (7) s'étendant parallèlement à un bord (8) des plaques de verre découpées (3), et présente un dispositif transporteur (11, 64) pour transporter les plaques de verre découpées (3) le long dudit bord inférieur (8), et par le fait que la monture (45, 82), laquelle est notamment du type à barreaux parallèles, peut être orientée par rapport à chacun des casiers (21) du chariot (20, 40, 80), de manière que les galets d'appui (48, 85) débordent radialement dans ce casier (21).

2. Dispositif selon revendication 1, caractérisé par le fait que les galets d'appui qui agissent sur le bord inférieur (8) des plaques de verre découpées peuvent être bloqués, ou sont remplacés par des appuis.

3. Dispositif selon revendication 1 ou 2, caractérisé par le fait qu'une table de transport (1) avec un dispositif transporteur qui est de préférence constitué de plusieurs bandes transporteuses (2), pour transporter, transversalement à leur bord (8), des plaques de verre découpées (3), est conjuguée au dispositif de relevage (4, 60).

4. Dispositif selon l'une des revendications 1 à 3, caractérisé par le fait que le dispositif transporteur (11, 64) conjugué au dispositif de relevage (4, 60), notamment les galets de transport du jeu de galets ou le transporteur sans fin du dispositif de relevage (4, 60), forment, dans la position orientée parallèlement à la table de transport (1), la butée de fin de course pour l'amenée de plaques de verre découpées (3).

5. Dispositif selon l'une des revendications 1 à 4, caractérisé par le fait qu'il est prévu plusieurs chariots (20, 40, 80) à casiers, lesquels chariots sont disposés les uns à la suite des autres et sont mobiles en translation, indépendamment l'un de l'autre, perpendiculairement (flèche 30) à la direction du transport des plaques de verre découpées.

6. Dispositif selon l'une des revendications 1 à 5, caractérisé par le fait que le ou les chariots (20) à casiers sont installés sur des châssis mobiles (27) qui, à l'aide d'un entraînement (51), peuvent être déplacés perpendiculairement (flèche 30) à la direction du transport des plaques de verre découpées (3).

7. Dispositif selon l'une des revendications 1 à 6, caractérisé par le fait que le dispositif transporteur linéaire (31, 86) présente de préférence plusieurs galets de transport (32, 87) qui peuvent être amenés à leur position active débordant vers le bas dans le casier (21).

8. Dispositif selon l'une des revendications 6 ou 7, caractérisé par le fait que le dispositif transporteur linéaire (31, 86) est monté sur le châssis mobile (27) ou sur le sol (34) avec possibilité d'être élevé ou abaissé.

9. Dispositif selon l'une des revendications 1 à 5, caractérisé par le fait que le ou les chariots (40, 80) à casiers présentent, côté inférieur, des roues (41, 81) qui sont éventuellement reçues dans des rails de guidage (42), et par le fait qu'il est prévu, sur le ou les chariots (40, 80) à casiers, un accouplement (50) avec lequel le ou les chariots (40, 80) à casiers peuvent être déplacés, perpendiculairement à la direction du transport des plaques de verre découpées, par un dispositif d'entraînement (51) pour modifier la position du ou des chariots (40, 80) à casiers

10. Dispositif selon l'une des revendications 1 à 9, caractérisé par le fait que les casiers (21) du chariot (20, 40, 80) à casiers sont délimités par des tiges ou des câbles tendus (22).

11. Dispositif selon l'une des revendications 1 à 10, caractérisé par le fait qu'il est prévu sur une délimitation latérale de chaque casier (21), des galets d'appui tournant librement, contre lesquels les plaques de verre découpées (3) s'appliquent par une face.

12. Dispositif selon l'une des revendications 1 à 11, caractérisé par le fait que les appuis ou les galets d'appui délimitant les casiers (21) vers le bas sont disposés à intervalles (13).

13. Dispositif selon revendication 12, caractérisé par le fait que les galets transporteurs (32, 87) du dispositif transporteur linéaire (31, 86) sont disposés entre les appuis ou les galets d'appui, avec possibilité de relevage et d'abaissement.

14. Dispositif selon l'une des revendications 1 à 13, caractérisé par le fait que les galets de transport (32, 87) sont montés sur une barre ou poutre commune (31, 86).

15. Dispositif selon l'une des revendications 1 à 14, caractérisé par le fait que la position de la monture (45, 82) peut être modifiée par déplacement de celle-ci (45, 82) et/ou du chariot (20, 40, 80) à casiers perpendiculairement aux casiers (21) du chariot (20, 40).

16. Dispositif selon l'une des revendications 1 à 14, caractérisé par le fait qu'il est prévu aux extrémités inférieures libres des bras (47) de la monture (45) du genre à barreaux, des galets d'appui (49) qui attaquent le bord inférieur (8) des plaques de verre découpées (3).

17. Dispositif selon revendication 16, caractérisé par le fait que les galets d'appui (49) sont équipés d'un entraînement.

18. Dispositif selon l'une des revendications 1 à 17, caractérisé par le fait qu'il est prévu, entre le dispositif de relevage (4, 60) et le (premier) chariot (20, 40, 80) à casiers, un dispositif (70) éventuellement déplaçable pour le transport de plaques de verre découpées (3) du dispositif de relevage (4, 60) au chariot (20, 40, 80) à casiers.

19. Dispositif selon revendication 17, caractérisé par le fait que le dispositif (70) présente un cadre-support (75) pour plaques de verre découpées (3), lequel peut être levé et abaissé.

20. Dispositif selon revendication 19, caractérisé par le fait que des galets d'appui (77) pour une plaque de verre découpée (3), éventuellement capables de tourner librement, sont montés sur le cadre d'appui (75).

21. Dispositif selon revendication 19 ou 20, caractérisé par le fait qu'il est prévu, sur le cadre d'appui (75), un dispositif transporteur (78) attaquant le bord inférieur (8) d'une plaque de verre découpée (3).
